Europäisches Patentamt

European Patent Office

Office européen des brevets

(19)

(11) Publication number: **0 067 548**

**A1**

(12)

# EUROPEAN PATENT APPLICATION

(21) Application number: **82302552.3**

(22) Date of filing: **19.05.82**

(51) Int. Cl.³: **B 64 C 27/00**
**F 16 F 7/10, G 05 D 19/02**

(30) Priority: **02.06.81 GB 8116792**

(43) Date of publication of application:
**22.12.82 Bulletin 82/51**

(84) Designated Contracting States:
**DE FR GB IT**

(71) Applicant: **M.L. AVIATION COMPANY LIMITED**
**M.L. Building Ajax Avenue Trading Estate**
**Slough Berkshire SL1 4BQ(GB)**

(72) Inventor: **Austin, Reginald Gene**
**"Choppers" Brent Knoll**
**Somerset, TA9 4DV(GB)**

(74) Representative: **Jennings, Guy Kenneth et al,**
**GILL JENNINGS & EVERY 53/64 Chancery Lane**
**London WC2A 1HN(GB)**

(54) Vibration suppressor.

(57) Unwanted oscillatory forces are counteracted by means of a vibration generating unit comprising a vibration generator in the form of an electric motor 1 which is itself caused to vibrate as a result of the reaction between a stationary swash plate 6 and a co-operating follower 5 driven by the motor 1. A sensing device in the form of an accelerometer mounted in the base of the unit responds to the amplitude, frequency and phase of an oscillatory force applied to the unit and provides automatic control to the motor 1 in respect of these parameters in such a way as to counterbalance the effects of the oscillatory force, the control in respect of amplitude of vibration being by adjustment of the angle of a mounting 10 for the swash plate 6 by means of a servo motor 18 driving a worm 15 meshing with a toothed sector 16 forming part of the mounting 10.

Fig.1.

EP 0 067 548 A1

GJE/181/37

M. L. Aviation Company Limited

- 1 -

## Vibration suppressor

This invention relates to the absorption of unwanted vibrations in structures such as land vehicles and aircraft. It is broadly applicable to any form of structure in which unwanted vibrations are induced by the operation of some form of prime mover, but is particularly applicable to aircraft structures, with specific reference to helicopters and other rotor-driven aircraft where large oscillatory forces are generated by the aerodynamic asymmetry of the rotor or rotors when the aircraft is in forward flight. These forces, which are generated at the rotor hub, are transmitted to all parts of the aircraft, leading to risk of fatigue in the aircraft structure and attached mechanisms. Vibration of the fuselage is particularly undesirable owing to the discomfort caused by crew and passengers.

Although previous attempts have been made to isolate and absorb such oscillatory forces, none have been completely successful. Not only were these previous attempts expensive in terms of cost and weight, but they were usually only effective at one particular frequency of excitation whereas the frequency varies over a considerable range, being dependent upon the flight condition.

- 2 -

According to the present invention the effect of an unwanted oscillatory force is counteracted by the introduction of an opposite and at least substantially equal oscillatory force by means of a vibration generating unit comprising a vibration generator and one or more sensing devices responsive to the amplitude, frequency and phase of an oscillatory force applied to the unit and connected to provide automatic control to the vibration generator in respect of these parameters in such a way as to counterbalance the effects of the oscillatory force. One or more such units are located so as to be subjected to the undesired oscillatory force and in this way it is possible to provide an effective counter-balancing of the unwanted forces at all frequencies of operation.

In general, more than one vibration generating unit will be required for any particular structure. For example, there may be a main unit situated at or close to the primary source of the oscillations and one or more supplementary units situated at points which are particularly susceptible to the oscillations.

Each vibration generator is preferably driven by an electric motor which produces the oscillation of a mass having a magnitude which is matched to the mass of the structure in which the unwanted oscillatory force is generated, the amplitude of the oscillation, its phase and its frequency, i.e. the speed of the motor, being controlled by the sensing device or devices.

By arranging that the motor itself constitutes the oscillatory mass, an appreciable saving in weight is achieved by avoiding the need for a separate mass.

Under these circumstances the vibration may be generated by the reaction between a swash plate and a co-operating follower. Although in theory, either the follower or the swash plate could be driven by the motor, in practice the former is more convenient since this means that the mounting of the swash plate itself is stationary and can thus be more easily adjusted to vary the amplitude of the vibration of the electric motor. The frequency is, of course, controlled by the speed of the motor, as is also the phase. Since the motor itself constitutes the oscillatory mass, different sizes of motor will be required according to the mass of the structure in which the unwanted oscillation is to be suppressed. A number of different sizes of motor may therefore be made available for this purpose.

Sensors for the control of phase and frequency are preferably in the form of an accelerometer included in the housing of the apparatus and a second accelerometer or other form of sensor on the motor itself. Differences of both frequency and phase can thus be measured electronically and used to control the motor speed. Instead of an accelerometer on the motor a magnetic pick-up on the motor shaft may be used or indeed the fluctuation of the magnetic field of the motor itself. The necessary adjustment of the swash plate may conveniently be obtained by a servo motor.

- 4 -

An example of apparatus in accordance with the invention will now be described with reference to the accompanying drawings, in which:-

Figure 1 is a longitudinal sectional view of the apparatus;

Figure 2 is a block diagram of the control system; and

Figure 3 is a longitudinal sectional view of the lower part of the apparatus as seen from the right hand side of Figure 1.

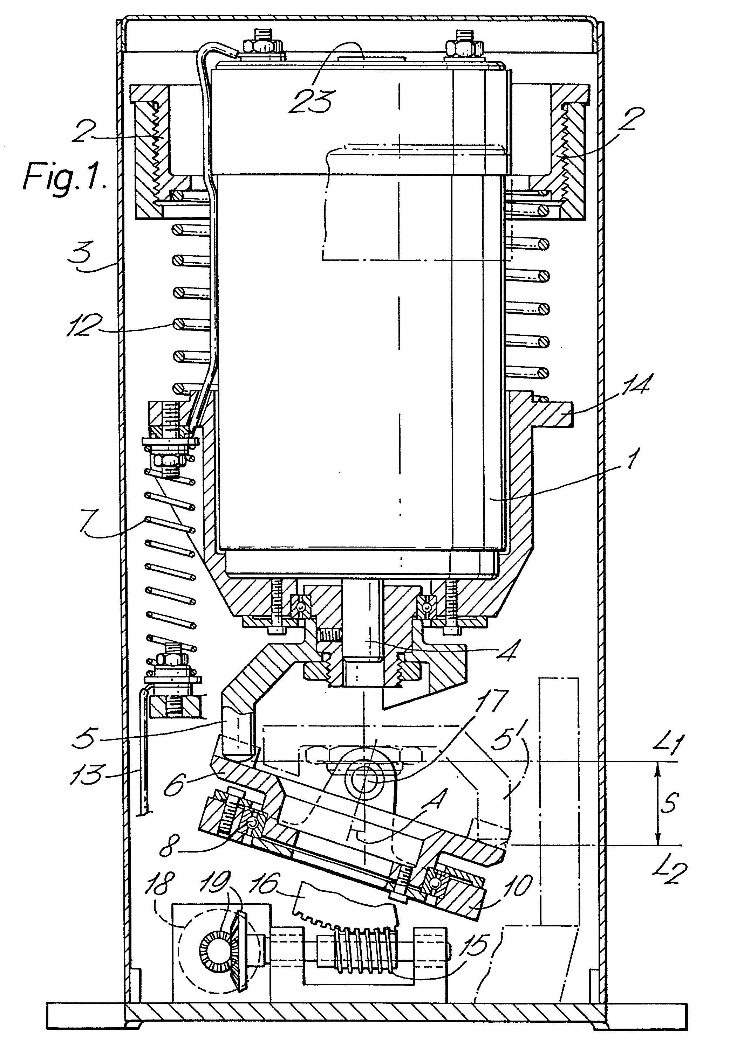

The apparatus is powered by an electric motor 1 which is mounted for oscillatory movement by a thrust mount 14 which may, for example, be located between sliders fitted to a frame lying in a plane perpendicular to that of the paper and thus not seen in Figure 1. Other alternative forms of mounting include flexible diaphragms, parallel linkages and so forth. The apparatus is enclosed by a protective casing, the wall of which is seen in section at 3, the remainder being broken away to show the interior. Power is supplied to the motor 1 along a conductive path which is shown as comprising an extensible cable 13 and a contact spring 7, although either of these components may be used on its own. The driving shaft 4 of the motor carries a driving arm 5 which co-operates with a swash plate 6. The swash plate 6 is mounted to turn in bearings 8 in an adjustable mounting 10 which enables the angle A between the axis of the motor 1 and that of the bearing 8 to be adjusted in accordance with the required amplitude of oscillation.

The motor 1 as a whole is biased downwardly by a compression spring 12 acting between upper brackets 2 and the thrust mount 14. The effect of the downward bias of the spring 12 is to ensure constant contact between the driving arm 5 and the swash plate 6.

The diametrically opposite position of the driving arm is shown in dotted lines at 5' and it will be seen that as a result of the angle of inclination A, the lower end of the driving arm 5 oscillates between levels $L_1$ and $L_2$ giving a stroke of reciprocation S. The magnitude of the angle A is controlled by a worm 15 meshing with a toothed sector 16 which is pivoted at 17 and forms part of the mounting 10 for the swash plate 6. The worm 15 is driven from a servo motor 18 through bevel gearing 19.

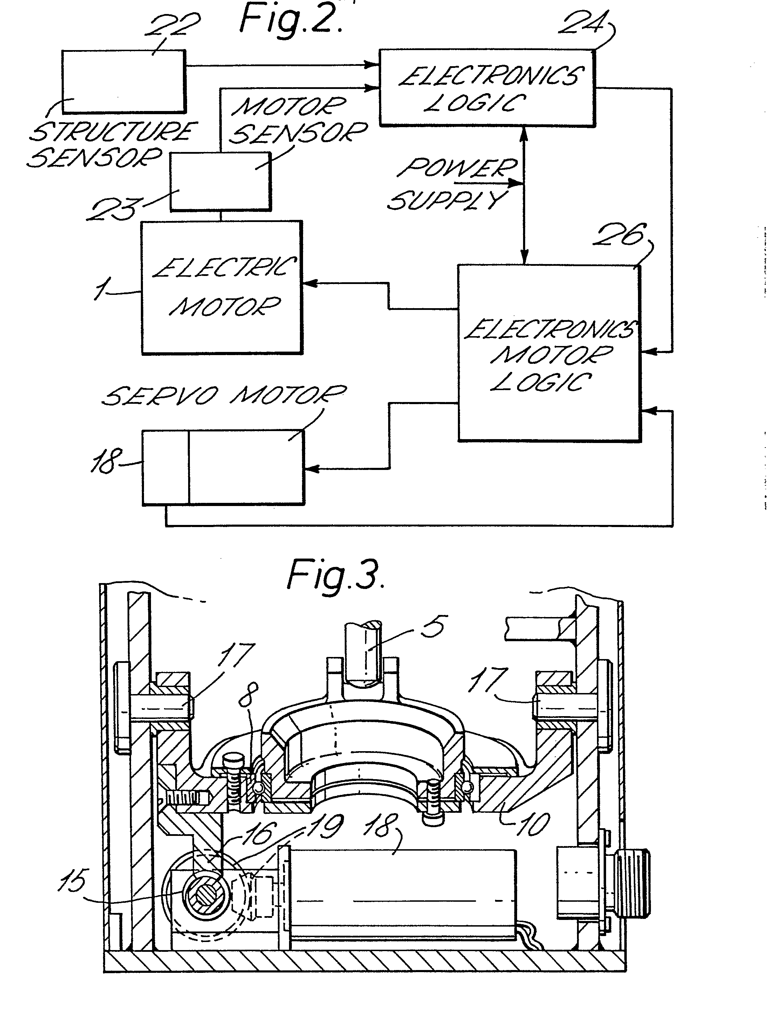

The apparatus is controlled electronically using the electrical output of an accelerometer 22 (not seen in Figures 1 and 3) which is mounted in the lower part of the protective casing and is thus attached effectively to the structure of the land vehicle or aircraft. This senses amplitude, frequency and phase of the oscillations of the structure, and a further sensor 23, mounted on top of the motor 1 measures the amplitude, frequency and phase of the motor oscillation. The signals from the two sensors are compared in a logic unit 24 (see Figure 2) and are converted into control signals and supplied by a second logic unit 26 to the motor 1 and also to the servo motor 18 for controlling the angle A of the swash plate 6. Thus the speed, amplitude and phase of the oscillating motor are controlled to oppose the impressed oscillation of the vehicle structure. The accelerometer 22 is preferably included in a modular composite electronics unit including also the logic units 24 and 26.

The apparatus may be manufactured in various sizes and speed ranges depending on the nature of the structure and of the oscillations to be counteracted. When fitted to an aircraft, the apparatus itself is fitted at a location dependent on the point on the aircraft structure where the oscillations have to be counteracted, that is to say either close to the source of the oscillations or in a region in which the oscillations are most noticeable, or both.

- 7 -

## C L A I M S

1. A vibration generating unit comprising a vibration generator and one or more sensing devices responsive to the amplitude, frequency and phase of an oscillatory force applied to the unit and connected to provide automatic control to the vibration generator in respect of these parameters in such a way as to counterbalance the effects of the oscillatory force.

2. A vibration generating unit according to claim 1 in which the vibration generator is driven by an electric motor which is itself caused to vibrate.

3. A vibration generating unit according to claim 2 in which the vibration is generated by the reaction between a swash plate and a co-operating follower.

4. A vibration generating unit according to claim 3 in which the swash plate is stationary and has a mounting of which the angle is adjustable in response to the output of the sensing device to control the amplitude of vibration.

5. A vibration generating unit according to any one of claims 2 to 4 in which there are two sensing devices, each in the form of an accelerometer, on mounted on the electric motor and the other mounted on a housing for the unit.

6. A vibration generating unit according to claim 5 and including means for comparing the outputs of the sensing devices and for providing control signals to the electric motor.

Fig.1.

## Fig.2.

STRUCTURE SENSOR · 22

MOTOR SENSOR · 23

ELECTRONICS LOGIC · 24

POWER SUPPLY

ELECTRIC MOTOR · 1

ELECTRONICS MOTOR LOGIC · 26

SERVO MOTOR · 18

## Fig.3.

European Patent
Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | US-A-3 635 429 (BALKE) * column 2, lines 40 to 71; column 4, lines 36 to 41 * | 1 | B 64 C 27/00 F 16 F 7/10 G 05 D 19/02 |
| | --- | | |
| A | FR-A-2 415 330 (IVANOV) * page 1, lines 1 to 6 and 12 to 17; page 4, lines 14 to 30; page 5, lines 29 to 32 * | 1 | |
| | --- | | |
| A | EP-A-0 008 585 (MARD) * claim 3 * | 1 | |
| | ----- | | |

TECHNICAL FIELDS
SEARCHED (Int. Cl. ³)

B 64 C
F 16 F
G 05 D

The present search report has been drawn up for all claims

| Place of search THE HAGUE | Date of completion of the search 14-07-1982 | Examiner ZERI A. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82